**Europäisches Patentamt**

**European Patent Office**

**Office européen des brevets**

(11) Publication number: **0 112 549**
**B1**

(12) **EUROPEAN PATENT SPECIFICATION**

(45) Date of publication of patent specification: **06.08.86**

(21) Application number: **83112844.2**

(22) Date of filing: **20.12.83**

(51) Int. Cl.⁴: **C 03 B 37/025**

(54) **Improved sintering of optical fiber preforms.**

(30) Priority: **22.12.82 US 452154**

(43) Date of publication of application:
**04.07.84 Bulletin 84/27**

(45) Publication of the grant of the patent:
**06.08.86 Bulletin 86/32**

(84) Designated Contracting States:
**DE FR IT NL SE**

(56) References cited:
**EP-A-0 038 982**
**FR-A-2 476 633**

(73) Proprietor: **Western Electric Company,**
**Incorporated**
**222 Broadway**
**New York, NY 10038 (US)**

(72) Inventor: **Fleming, James William, Jr.**
**2 Shasta Pass**
**Fanwood New Jersey 07023 (US)**

(74) Representative: **Blumbach Weser Bergen**
**Kramer Zwirner Hoffmann Patentanwälte**
**Radeckestrasse 43**
**D-8000 München 60 (DE)**

## Description

*Background of the Invention*

### 1. Field of the Invention

The present invention relates to a method of making an optical fiber as defined in the preamble of claim 1. The method serves to improve the sintering of preform material in the manufacture of optical fibres.

### 2. Description of the Prior Art

Optical fibers are typically made by depositing glass particulate material in or on a support. The porous deposited material is then consolidated by heating to an elevated temperature, which process is also referred to as "sintering". The resulting structure is referred to as a "preform" and can be in the form of either a rod or a tube. An optical fiber is drawn from the preform.

One commercially successful method of making an optical fiber preform is by the modified chemical vapor deposition (MCVD) technique, described in U.S. Patent No. 4,217,027. In the MCVD technique, particulate material is formed inside a tube, and the deposited particulates are then sintered by means of a moving hot zone produced by a heat source external to the tube. The external heat source also provides the reaction of the precursor material within the tube that results in the deposits on the inside of the tube. The longitudinal velocity of the heat source relative to the tube is usually determined by considerations that relate to the reaction rate of the precursor material, and also the need to produce a relatively constant deposit layer along the length of the tube; that is, to avoid or minimize a taper of deposited materials along the tube. Another constraint is that the heat source should produce adequate sintering of the deposited material. In practice, this latter requirement is typically provided for by monitoring the temperature in or near the hot zone by means of an optical pyrometer which is an infrared radiation sensing device. A control signal is then provided that adjusts the flow rate of the gases within the torch used as the external heat source to provide an adequate temperature for sintering the deposited material.

It is also possible to make a preform by reacting precursor material in a flame and depositing the material on a support. In one technique, the support is a rod, with the flame moving axially along its length to deposit material thereon; see, for example, U.S. Patent Nos. 3,826,560 and 3,823,195. In another technique, particulate material is directed perpendicularly onto the surface of a rotating substrate, with the deposit forming axially on the substrate. These techniques also require sintering of the deposited particulate material, which can be accomplished by heating the unconsolidated preform in a furnace.

A high-rate technique for making an optical fiber preform using a plasma is disclosed in U.S. Patent No. 4,331,462. As frequently practiced, that technique is an MCVD technique, wherein the hot zone is in the form of two zones, at least one of which is generated primarily by a plasma fireball. As typically practiced, the speed at which the plasma technique can produce a preform is limited primarily by the rate at which the deposited material can be sintered to form a smooth, glassy layer. The rate of traverse of the sintering torch has in the past been manually adjusted. Automation of this operation and an increase in the sintering rate would be very advantageous.

*Summary of the Invention*

According to the present invention the aforementioned need is complied with the characterizing features of claim 1. In accordance therewith a light beam is directed through at least partially sintered preform material while causing relative movement of said preform and a heat source that produces the sintering. The intensity of the transmitted light is detected to control the velocity of said relative movement in dependence thereof, i.e. the rate at which the material is sintered, to produce a non-porous glassy layer. The technique is advantageously used when the preform material to be sintered is produced or deposited with the assistance of a plasma in the interior portion of a preform tube. It can also be used to aid the sintering of porous glassy material formed by other techniques.

*Brief Description of the Drawing*

FIG. 1 shows a plasma deposition technique suitable for practicing the method according to the present invention;

FIG. 2 illustrates an optical arrangement suitable for practicing the method according to the present invention; and

FIG. 3 shows an electrical comparison circuit suitable for use in practicing the method according to the present invention.

*Detailed Description*

In the present technique, a light beam, typically produced by a laser, is directed through an at least partially sintered portion of a preform while the preform is moving relative to a heat zone that produces the sintering. A control signal produced by the intensity of the light transmitted through the preform is used to control the rate at which the heat source moves relative to the preform. The present technique is advantageously used in conjunction with a plasma-assisted deposition technique, whereby a high rate of preform manufacture is accomplished.

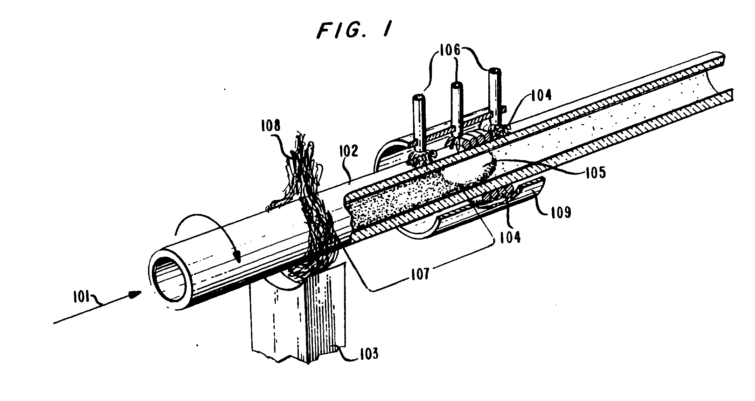

Referring to FIG. 1, a reactant flow 101 of precursor materials is directed through a rotating preform tube 102. The preform tube, also referred to as a substrate tube, starter tube, or support tube, is typically fused silica. Typical precursors include, for example, $SiCl_4$, $GeCl_4$, $POCl_3$, a fluoride, etc. Oxygen is also flowed through the tube, and a reaction is initiated in a heat zone 107, produced in part by flame 108 from torch 103. The reacted precursor material forms particulate matter that deposits on the inside of tube 102. The deposition is assisted by means of plasma fireball 105, which enhances the thermophoretic forces that drive the particulates to the wall of the tube. The plasma is produced by coils 104 surrounding the tube and is energized typically by an rf source. Water is fed through nozzles 106 located in baffle 109 to cool the tube. This prevents the high temperature of the fireball from causing the tube to sag, and also further enhances the thermophoretic deposition forces. The plasma technique typically allows a high rate of reaction of the precursor material, such that a deposition rate of particulate material of several grams per minute is readily achieved.

The consolidation of the particulate material into a smooth, glassy layer is accomplished primarily by means of torch 103 as it traverses to the right, as viewed in FIG. 1. However, other arrangements are possible. For example, the plasma fireball 105 can precede the torch 103; that is, be located to the left of torch 103, as viewed in FIG. 1. In many cases, torch 103 and plasma fireball 105 travel at the same, or approximately the same, rates. In that case, sintering is continuously accomplished during each deposition pass, as the tandem heat zone moves from left to right, as viewed in FIG. 1. However, other deposition and sintering schemes are possible. For example, deposition can be accomplished using only plasma fireball 105 or else plasma fireball 105 assisted by torch 103 moving at a sufficiently rapid rate so that sintering does not occur on each pass. Also, torch 103 can be held stationary near the entrance of tube 102 to assist in the reaction of the particulate material, with fireball 105 moving axially along the tube to produce the majority of the deposition on the inside of the tube. Following a multiplicity of such passes, torch 103 can then be moved along tube 102 to produce the sintering of a multiplicity of layers so deposited.

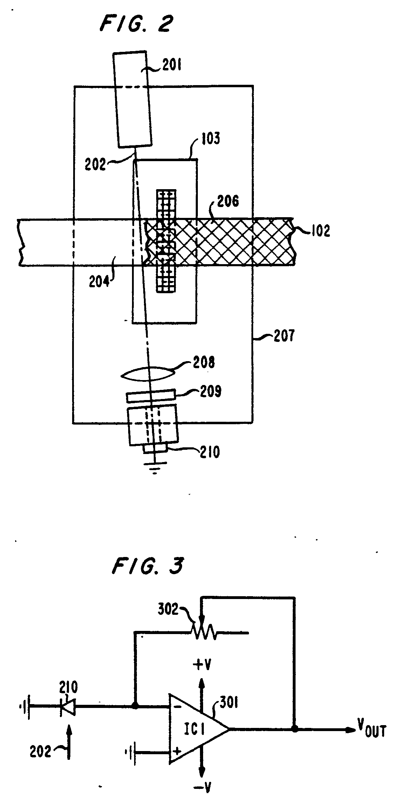

In the present technique, the velocity of the heat source used for sintering (torch 103 in FIG. 1) is adjusted in response to the transmission of light through the sintered or partially sintered zone of the preform tube. Referring to FIG. 2, a light source 201 directs a beam of light 202 through the preform tube 102. Source 201 is typically a helium-neon laser, having an output of about 2 milliwatts. The beam is passed through the tube in close proximity to the sintering torch 103. On emerging from the substrate tube, the beam first passes through a lens 208 and then through a narrow band filter 209, which allows the beam to pass through but blocks out most of the radiation from the hot tube and rf plasma. A filter having transmission wavelengths of 6328 nm (6328 Angstroms) is suitable for use with a helium-neon laser. The beam then passes onto a detector 210, typically a silicon photodiode. The lens 208 primarily ensures that the beam, which may be dispersed on its passage through the tube by bubbles or other imperfections in the tube wall, is directed onto the detector. The torch 103 is mounted on fire carriage 207, which moves to the right, as viewed in FIG. 2. This produces sintering of the deposited material, producing a sintered region 204 from the unsintered material in region 206. The signal from the detector is then used to adjust the velocity of fire carriage 207 as it traverses tube 102.

The operation of the controller will be more fully illustrated by means of the following Example.

### Example

This Example illustrates the present sintering technique for use with a plasma-assisted deposition scheme using a tandem heat zone, as further described in above-noted U.S. Patent No. 4,331,462. In this Example, a fused silica tube, approximately 1 meter long having an inside diameter of 46 millimeters and an outside diameter of 50 millimeters, is used as the substrate for deposition of particulate material. Through this tube was directed a reactant flow of precursor materials, resulting from passing oxygen through bubblers at a temperature of 46°C. Oxygen gas flowed through a silicon tetrachloride bubbler at a rate of 800 $cm^3$ per minute, and oxygen also flowed through a $POCl_3$ bubbler at a rate of 200 $cm^3$ per minute.

The resulting gases, and $CCl_2F_2$ gas at a rate of 80 $cm^3$ per minute, were flowed through substrate tube 102. An oxyhydrogen torch 103 produced a flame 108, producing the first portion of a tandem heat zone 107. The precursor chlorides were substantially oxidized in the first portion of the heat zone, producing particulate matter. The particulates were directed onto the inner wall of the tube by means of plasma fireball 105. The plasma was generated by 11 kilowatts of rf energy at a frequency of 3 megahertz applied to coil 104, being 4 turns of 0.635 cm. ($\frac{1}{4}$ inch) diameter copper having an inside diameter of 56 millimeters. The plasma portion of the tandem heat zone was cooled with deionized water flowing through nozzles 106 at a rate of 0.7 liters per minute. During the deposition process, the plasma fireball 105 moved axially along the length of the preform tube at a varying velocity in order to produce a substantially constant thickness of particulate material inside the tube according to principles known in the art. The minimum velocity of plasma fireball 105 was approximately 2.5 millimeters per second near the beginning of the tube (to the left, as viewed in FIG. 1), with a maximum velocity of approximately 6 millimeters per second near the end of the tube. At the above flow rates, approximately 4.5 grams per minute of glass particulate material was deposited on the inside of the tube.

A control circuit suitable for use with the present invention is shown in FIG. 3. An operational amplifier 301 is used to convert the output of photodiode 210 to a voltage of 0 to 15 volts D.C., corresponding to 0 to full diode illumination. The gain of the circuit is set by potentiometer 302. The signal is supplied to the control unit of a microprocessor-controlled fire carriage. A supplied voltage of 0 to 5 volts sets an internal flag to 0, corresponding to the case of incomplete sintering, whereas a voltage of 5 to 15 volts sets the flag to 1, which indicates complete sintering. The gain adjustment 302 is used to set the output voltage to the level of 5 volts at the required level of sintering.

During fire carriage control, the microprocessor examines the internal flag set by the sintering sensor circuit every 0.01 second. If the flag is set to 0 (incomplete sintering), the sintering torch speed is reduced. The torch is halted for a maximum of 1 second (100 flag examinations) before it is moved forward 1 millimeter, and the process repeats. If the internal flag is set to 1 (complete sintering), the torch is allowed to progress at its preset maximum speed. This speed is set so that it can never catch up and collide with the plasma fire carriage. In typical operation, this control provides a minimum speed of 1 millimeter per second and a maximum speed of 5 millimeters per second for the sintering torch. The minimum speed is adjusted to be sufficient to prevent tube collapse from excessive heating from torch 103.

Under the above-noted conditions, it was found that when adjusting the velocity of torch 103 by manually observing the sintering process and thereby adjusting the rate of torch 103 to produce adequate sintering, typically a maximum torch velocity of approximately 4 millimeters per second was obtained. Thus, approximately 3 minutes are required to deposit and sinter a single layer over a usable preform length of approximately 70 centimeters. When the above-noted fusion monitor is used, it was found that the maximum velocity of torch 103 can increase typically to about 5 millimetes per second under the above conditions, allowing a substantial decrease in the sintering time. Since typically 10 to 40 layers of cladding material are deposited in a tube, substantial time-saving results from the above-noted technique.

While an increase in sintering speed is an advantage of the present technique, an independent advantage is that it frees an operator from the necessity to closely monitor the sintering process. The more automated process facilitated by the present technique thus allows a saving in overall operator time over a number of lathes operating simultaneously.

As noted above, other optical fiber production techniques depending upon the sintering of porous material may be improved by the present technique. For example, with axial preforms produced by any of the above-noted flame deposition techniques, the unsintered preforms can be inserted into a furnace and sintered as they pass through the hot zone inside the furnace. In addition, it is known to make optical fiber preforms from colloidal gels, wherein a deposition step *per se* is not necessarily present; see, for example, "New Optical Fibre Fabrication Method", K. Susa et al, *Electronics Letters*, Vol. 18, page 499 (1982). A porous structure results from that process, which can be sintered according to the present technique. By directing a light beam through the preform in the sintering zone, the present technique can be used advantageously to maximize the rate of sintering, or reduce operator requirements, or both.

**Claims**

1. A method of making an optical fiber by forming a preform (102) comprising porous glassy material, sintering said porous material to form a nonporous glassy material, and drawing an optical fiber from said preform, characterized in that said sintering comprises directing a light beam (202) through an at least partially sintered portion of said preform (102) while causing relative movement of said preform and a heat source (103) that produces said sintering, detecting the amount of light transmitted through said at least partially sintered portion, and controlling the velocity of said relative movement in dependence to said detected amount of transmitted light.

2. The method according to claim 1, characterized by producing said light beam by a laser (201).

3. The method according to claim 2, characterized in that said laser (201) is a helium-neon laser.

4. The method according to claim 1 or 2 or 3, characterized in that said detecting of said amount of transmitted light results in an increase in said velocity when the amount of transmitted light exceeds a certain level, and wherein said detecting of said amount of transmitted light results in a decrease in said velocity when said amount is below a certain level.

5. The method according to any one of preceding claims 1—4, characterized in that said porous glassy material is made by depositing particulate material (206) inside a tube (102).

6. The method according to claim 5, characterized by accomplishing said depositing of particulate material (206) at least in part by means of a plasma fireball (105) that moves axially within said tube (102).

7. The method according to claim 5, characterized by producing particulate material (206) by a chemical reaction within a flame.

8. The method according to claim 5 or 6 or 7, characterized by producing said sintering at least in part by means of a flame (108) produced by an oxyhydrogen torch (103) that moves axially along a length of said tube (102).

**Patentansprüche**

1. Verfahren zum Herstellen einer optischen Faser durch
— Erzeugen einer Vorform (102), die poröses glasiges Material umfaßt,
— Sintern des porösen Materials zur Erzeugung eines nichtporösen glasigen Materials und
— Ziehen einer optischen Faser von der Vorform, dadurch gekennzeichnet, daß das Sintern umfaßt

— Richten eines Lichtstrahls (202) durch einen wenigstens teilweise gesinterten Teil der Vorform (102), während eine Relativbewegung der Vorform und einer die Sinterung erzeugenden Wärmequelle (103) erzeugt wird,

— Nachweisen der durch den wenigstens teilweise gesinterten Teil hindurchgelassenen Lichtmenge und

— Steuern der Geschwindigkeit der Relativbewegung in Abhängigkeit von der nachgewiesenen hindurchgelassenen Lichtmenge.

2. Verfahren nach Anspruch 1, gekennzeichnet durch Erzeugen des Lichtstrahls durch einen Laser (201).

3. Verfahren nach Anspruch 2, dadurch gekennzeichnet, daß der Laser (201) ein Helium-Neon-Laser ist.

4. Verfahren nach Anspruch 1 oder 2 oder 3, dadurch gekennzeichnet, daß der Nachweis der hindurchgelassenen Lichtmenge in einer Zunahme der Geschwindigkeit resultiert, wenn die hindurchgelassene Lichtmenge einen gewissen Wert überschreitet, und der Nachweis der hindurchgelassenen Lichtmenge in einer Abnahme der Geschwindigkeit resultiert, wenn die Lichtmenge unterhalb eines gewissen Wertes liegt.

5. Verfahren nach einem der vorstehenden Ansprüche 1 bis 4, dadurch gekennzeichnet, daß das poröse glasige Material hergestellt wird durch Niederschlagen von partikelförmigem Material (206) innerhalb eines Rohrs (102).

6. Verfahren nach Anspruch 5, gekennzeichnet durch Bewerkstelligen des Niederschlagens von partikelförmigem Material (206) wenigstens teilweise mit Hilfe eines Plasma-Feuerballs (105), der sich innerhalb des Rohrs (102) axial bewegt.

7. Verfahren nach Anspruch 5, gekennzeichnet durch Erzeugen von partikelförmigem Material (206) durch eine chemische Reaktion innerhalb einer Flamme.

8. Verfahren nach Anspruch 5 oder 6 oder 7, gekennzeichnet durch Bewerkstelligen der Sinterung wenigstens teilweise mit Hilfe einer Flamme (108), die von einem sich axial längs einer Länge des Rohrs (102) bewegenden Sauerstoff/Wasserstoff-Brenner (103) erzeugt wird.

## Revendications

1. Un procédé de fabrication d'une fibre optique par la formation d'une préforme (102) consistant en matière vitreuse poreuse, le frittage de la matière poreuse pour former une matière vitreuse non poreuse et l'étirage d'une fibre optique à partir de cette préforme, caractérise en ce que le frittage comprend les opérations qui consistent à diriger un faisceau lumineux (202) à travers une partie au moins partiellement frittée de la préforme (102), tout en produisant un mouvement relatif entre la préforme et une source de chaleur (103) qui produit le frittage, à détecter la quantité de lumière transmise à travers la partie au moins partiellement frittée, et à commander la vitesse du mouvement relatif sous la dépendance de la quantité détectée de lumière transmise.

2. Le procédé selon la revendication 1, caracterise en ce que le faisceau lumineux est produit par un laser (201).

3. Le procédé selon la revendication 2, caracterise en ce que le laser (201) est un laser hélium-néon.

4. Le procédé selon la revendication 1, 2 ou 3, caracterise en ce que la détection de la quantité de lumière transmise conduit à une augmentation de la vitesse lorsque la quantité de lumière transmise dépasse un certain niveau, et en ce que la détection de la quantité de lumière transmise conduit à une diminution de la vitesse lorsque cette quantité est inférieure à un certain niveau.

5. Le procédé selon l'une quelconque des revendications 1—4 précédentes, caracterise en ce que la matière vitreuse poreuse est formée par dépôt d'une matière sous forme de particules (206) à l'intérieur d'un tube (102).

6. Le procédé selon la revendication 5, caracterise en ce que le dépôt de matière sous forme de particules (206) est effectué au moins en partie au moyen d'une boule de feu (105) consistant en un plasma qui se déplace axialement à l'intérieur de tube (102).

7. Le procédé selon la revendication 5, caracterise en ce que on produit la matière sous forme de particules (206) par une réaction chimique dans une flamme.

8. Le procédé selon la revendication 5, 6 ou 7, caracterise en ce que on produit le frittage au moins en partie à l'aide d'une flamme (108) produite par un chalumeau oxhydrique (103) qui se déplace axialement sur une longeuer du tube (102).

FIG. 1

## *FIG. 2*

## *FIG. 3*